# EUROPEAN PATENT APPLICATION

(11) **EP 0 854 033 A2**
(43) Date of publication of application: **22.07.1998**
(21) Application number: 98100863.4
(22) Date of filing: 19.01.1998
(51) Int. Cl.: B32B 27/36

(54) **A polyester multilayer sheet having excellent impact-strength and weatherability, and a process for preparing the same**

(30) Priority: 20.01.1997 KR 9701490
(71) Applicant: Kolon Industries, Inc., Kwacheon-city, Kyunggi-do 427-040 (KR)
(72) Inventor: Ah, Kim Kyeong, Yongin-City, Kyunggi-Do (KR); Bum, Kim Young, Paldal-Gu, Suwon-City, Kyunggi-Do (KR); Seok, Kim Young, Yangcheon-Gu, Seoul (KR); Cheol, Shin Yong, Kangnam-Gu, Seoul (KR); Kun, Son Boung, Yongin-Shi, Kyunggi-Do (KR)
(74) Representative: TER MEER STEINMEISTER & PARTNER GbR

(57) **Abstract**

The present invention relates to a polyester multilayer sheet having excellent impact strength and weatherability, and relates to a process for preparing the same.

The process of the present invention comrises coextruding at least 2 kinds of copolyester resins, composed of 5 - 99 mol% of ethyleneterephthalate and 1 - 95 mol% of ethylenenaphthalate or ethyleneisophthalate, having at least 0.005 dl/g of inherent viscosity difference to each other, into 3 - 7 layers of multilayer sheet which had been arrayed by turns with high viscosity resin and low viscosity resin, and its outer layer has the higher inherent viscosity than the inner layer.

The polyester multilayer sheet of the present invention is suitable for window glass substitute of building, transparent agricultural intercepting material and clothing material.

## Description

### BACKGROUND OF THE INVENTION

### Field of the Invention

The present invention relates to a polyester multilayer sheet and a process for preparing the same suitable for window glass substitute of building, transparent clothing material for agriculture and several other uses based on its excellent impact strength, weatherability, and transparency.

More particularly, the present invention relates to a polyester transparent multilayer sheet, having excellent impact strength and weatherability characterized by coextruded turn with more than 3 layer of sheets using more than 2 kinds of copolyester resins which are composed of 5 ∼ 99 mol % of ethyleneterephthalate and 1 ∼ 95 mol% of ethylenenaphthalate or ethyleneisophthalate and have at least 0.005 dl/g of inherent viscosity difference each others, and have higher inherent viscosity of sheet arrayed in outer layer than that of inner layer.

Additionally the present invention relates to a process for preparing polyester multilayer sheet having excellent impact strength and weatherability, characterized by coextruding more than 2 kinds of copolyester resins, which are composed of 5 ∼ 99 mol% of ethyleneterephthalate and 1 ∼ 95 mol% of ethylenenaphthalate or ethyleneisophthalate and have at least 0.005 dl/g of inherent viscosity difference each others, on more than 3 layers of multilayer sheet which had been arrayed in turn by high inherent viscosity resin and low inherent viscosity resin, and its outer layer has the higher inherent viscosity than the inner layer.

### Description of Prior Art

Efforts of alternating constructional glass with transparent plastic have been unceasingly made since those of transparent resins such as Polystyrene, Acryl and Polycarbonate had been invented. It has been anticipated that several plastic material could replace glass in various usage such as lighting window based on its merits of lightness in weight and impact-resistance.

This plastic material, however, is not practically used as entire substitute for glass due to its low weatherability. In other words, glass made of inorganic material, has almost perfect weatherability, but plastic material made of organic material comprising vulnerability to UV rays, has too low weatherability to secure a position as glass substitution entirely.

Though Acryl resin and Polycarbonate are currently used as typical material of transparent sheet instead of glass in certain part, Acryl is weak in its impact strength, and Polycarbonate is vulnerable in its weatherablilty. Therefore, these two material can not satisfy those two required properties of most important as glass substitute at the same time.

In the mean time, polyester resin represented by polyethyleneterephthalate or polyethylenenaphthalate, has lots of merits required as material of transparent sheet for glass substitute that :
- it has excellent mechanical properties, transparency, and durability;
- it is able to form in thicker than 3 mm transparent sheet, required for glass substitute as soundproofing wall because the polyester resin could be properly delayed in its crystallization by copolymerization or blend;
- it has 20 ∼ 25 times of impact strength as Acryl, and 2 ∼ 3 times of weatherability as Polycarbonate; and
- its price is similar or cheaper than Acryl.

Actually, some polyester resins product suitable for preparing various kinds of transparent sheets have been invented by the researchers in several countries and practically are on the market. These are go with the alias of amorphous polyester.

This amorphous polyester, however, has weaken by UV rays if it has been used in outdoor for a long time due to its relatively vulnerable weatherability than Acryl.
This phenomenon is because that the polyethyleneterephthalate resin allows to transmit over than 320 nm UV rays.

In case, UV rays stabilizer can be added in order to cover this vulnerability, the goods value as glass substitute which requires transparency with no color, shall be impaired due to deteriorated color. From this kinds of reason, and on behalf of developing certain polyester resin comprising excellent weatherability and transparency, it is essential to produce certain polyester resin to be able to protect UV rays fundamentally.

On the other hand, AMOCO Technical Magazine (FA13a, 1994) suggests a method of preparing mono-layer transparent sheet comprising 2 ∼ 3 times of weatherability as polyethyleneterephthalate by applying the copolymer of polyethyleneterephthalate and polyethylenenaphthalate as raw material in order to use the UV protecting property of polyethylenenaphthalate. This copolyester resin could be applied to heat-resistance container, gas-proof container, refillable/returnable container, medicine container and UV protecting container based on its excellent heat-resistance, protecting property of oxygen, carbon dioxide, vapor and UV, chemical-resistance and hydrolysis-resistance.

Since the price of polyethylenenaphthalate itself is fairly expensive, an economic efficiecncy, despite of the improved UV protecting property, shall be deteriorated if polyethylenenaphthalate is used too much. Meanwhile, if polyethylenenaphthalate is used too little, the resin shall loose its UV protecting property and shall have weaken by UV lights.

Accordingly, the purpose of present invention is to provide polyester multilayer sheet suitable for window glass substitute of building or house based on its excellent impact strength, weatherability, and transparency with cheap production cost.

### SUMMARY OF THE INVENTION

The present invention relates to a polyester multilayer sheet and a process for preparing the same suitable for window glass substitute of building, transparent clothing material for agriculture and several other uses based on its excellent impact strength, weatherability, and transparency.

More particularly, the present invention relates to a polyester transparent multilayer sheet characterized by coextruded in turn with more than 3 layer of sheets comprising more than 2 kinds of copolyester resins which are composed of 5 ∼ 99 mol% of ethyleneterephthalate and 1 ∼ 95 mol% of ethylenenaphthalate or ethyleneisophthalate and have at least 0.005 dl/g of inherent viscosity difference each others, and have higher inherent viscosity of sheet arrayed in outer layer than that of inner layer.

Additionally the present invention relates to a process for preparing polyester multilayer sheet having excellent impact strength and weatherability, characterized by coextruding more than 2 kinds of copolyester resins which are composed of 5 ∼ 99 mol% of ethyleneterephthalate and 1 ∼ 95 mol% of ethylenenaphthalate or ethyleneisophthalate and have at least 0.005 dl/g of inherent viscosity difference each others, on more than 3 layers of multilayer sheet which had been arrayed in turn by high inherent viscosity resin and low inherent viscosity resin, and its outer layer has the higher inherent viscosity than the inner layer.

### DESCRIPTION OF THE PREFERRED EMBODIMENT

Raw material of polyester resin used in the present invention is more than 2 kinds of copolyester resin, which have been delayed in its crystallization speed in order that thicker than 2 mm of transparent sheet may prepared in calender for preparing transparent sheet. In preparing this copolyester resin, dimethylterephthalate or terephthalic acid with ethylene glycol are used as major component, and dimethyl-2,6-naphthalenedicarboxylate, dimethylisophthalate or isophthalic acid with ethylene glycol are used as copolymerization component.

Copolyester resin is composed of 5 ∼ 99 mol% of ethyleneterephthalate (more preferably 85 ∼ 99mol%) and 1 ∼ 95 mol% of ethylenenaphthalate or ethyleneisophthalate (more preferably 1 ∼ 15mol%), its favorable inherent viscosity is 0.70 ∼ 0.90 dl/g. Difference in inherent viscosity between copolyester resins applied in the present invention is at least 0.005 dl/g or above in order to coextrude on multilayer sheet through coextruder.

If the difference in inherent viscosity between copolymerized polyester resins is below than 0.005dl/g, it would not be possible to prepare multilayer sheet due to mixing of resins during coextrusion through coextruder.

Constitution ingredients and copolymerization ratio of each sheets which compose multilayer sheet of the present invention shall not be of much importance either in same or different.

Prepare polyester multilayer sheet of the present invention by coextruding above illustrated more than 2 kinds of copolyester resins on more than 3 layers of multilayer sheet which has been arrayed by high viscosity resin and low viscosity resin mutually through coextruder.

The polyester multilayer sheet in the present invention have remarkably improved UV protecting property and impact strength than monolayer polyester sheet, while its transparency does not decrease.

Detailed illustration on the present invention will be followed hereinafter.
Prepare copolymer, having anticipated viscosity by performing next serial steps :
- On the whole repeating unit of copolymerized polyester resin, pour 5 ∼ 99 mol% of dimethylterephthalate (more preferably 85 ∼ 99mol%), 1 ∼ 95 mol% of dimethyl-2,6-naphthalene dicarboxylate, dimethylisophthalate or isophthal acid (more preferably 1 ∼ 15 mol%), and 150 ∼250 mol% of ethylene glycol into reactor;
- Obtain some copolymer, comprising low molcular weight by having them transesterification reaction under certain catalyzers such as Zinc, Manganese, Cobalt, Magnesium, or Calcium; and
- By depressurizing below than 1 Torr, perform polymerization reaction at 270 ∼ 300°C by applying polymerization catalyzer such as Antimony, and Germanium.

With the above copolymer, do polymerize again for 10 ∼ 30 hours at 210 ∼ 230°C, in less than 1 Torr vacuum status, prepare more than 2 kinds of copolymer having its inherent viscosity is 0.75 ∼ 0.90 dl/g, and the difference of inherent viscosity between 2 kinds of copolymer is over than 0.005 dl/g.

After dried up the prepared copolymer below than 50 ppm moisture at 160°C, prepare 2 ∼ 10mm thick multilayer sheet by arraying the more than 2 kinds of copolymeer in turn using coextruder which can make multilayer sheet.
During coextrusio, array the higher inherent viscosity polyester resin in outer layer than inner layer. As for the layers arrayed from top to bottom array the high viscosity resin and the low viscosity resin by turns. And then prepare multilayer sheet which has different inherent viscosities and refractive indexes in each layers.

Favorable layers of polyester multilayer sheet in the present invention shall be 3 ∼ 7 layers, but it would not be much matter if the multilayer sheet is composed of more than 7 layers.

Favorable thickness of polyester multilayer sheet in the present invention shall be 2 ∼ 10mm, but the thick shall not be specially restricted.

Polyester multilayer sheet of the present invention is a multilayer sheet arrayed in turn with more than 2 kinds of copolyester resins comprising the difference of inherent viscosity between 2 kinds of copolyester resins is over than 0.005 dl/g, and has different inherent viscosities and refractive indexes in each layers.
Different composition ratio and/or different inherent viscosity are the reasons why refractive indexes are different in each layers.

If the thickness of the polyester multilayer sheet in the present invention is 3 mm, its visible light transmittance is over than 85%, and its weatheability is so excellent as to protect more than 85% of UV lights which has less than 365 Nanometer in wavelength.

As the polyester multilayer sheet of present invention is composed of mutually arrayed several layers having different inherent viscosities and refractive indexes, incoming light to the inside of sheet in each layer shall be reflected partially at interface of the each layer. As the reflected light at this case is usually certain UV lights which have short wavelength, UV lights transmittance shall be remarkably lowered. Consequently, the weatherability of polyester multilayer sheet of the present invention shall be increased. This effect of protecting UV lights is in direct proportion to the number of layers in multilayer sheet and also to the difference of inherent viscosity of the copolyester resins in each layer.

In addition, it is possible to prepare multilayer sheet by coextruding more than 2 kinds of resins having different inherent viscosities not only by different kinds of resins but also by same kinds of resins having different inherent or melt viscosities during extrusion. The larger difference of melting viscosities between copolyester resins, the easier forming of multilayer sheet without mixing at the inside of the melt line or the die of coextruder. And as for the sheet coextruded with different resins having different mechanical strength by turns, impact strength shall be obviously improved due to the same effect as reinforcing effect in composite material by matrix resin and fiber.

The present invention will be discussed more particularly through following examples and comparative examples. The present invention however, does not limited only to these examples :

### EXAMPLE 1

### PREPARING COPOLYMER

Prepare copolymer(X), its inherent viscosity is 0.65 dl/g, by performing next 3 steps ;
- pour 1 mol% of Dimethyl-2,6-naphthalenedicarboxylate(NDC), 99 mol% of Dimethylterephthalate(DMT), and 200 mol% of Ethylene glycol(EG) into reactor;
- remove over than 98% theoretical amount of methanol occured during transesterification reaction at 230°C under 400 ppm of Manganese Acetate, and
- polymerize under decreased pressure to below than 1 Torr at 280°C after adding 300 ppm of Antimony Oxide and 400 ppm Phosphorides thermal stabilizer.

Then prepare the low viscosity copolyester regin (hereinafter called 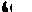 resin A 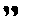 ), its inherent viscosity is 0.70 dl/g, by solid state polymerization of the prepared copolymer(X) for 5 hours at 180°C. In the mean time, prepare the high viscosity copolyester resin (hereinafter called 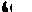 resin B 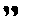 ), its inherent viscosity is 0.75 dl/g, by solid state polymerization of the prepared copolymer(X) for 14 hours at 220°C under vacuum.

### PREPARING SHEET

After drying the prepared 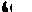 resin A 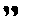 and 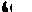 resin B 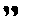 to their moisture conent less than 50 ppm at 160°C, then produce multilayer sheet by coextruding 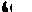 resin A 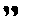 and 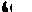 resin B 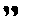 through a T-Die(width=110cm) of coextruder.
The multilayer sheet is 3 layers, and the thickness is 3 mm. In totally, "resin A" and "resin B" are arrayed by turns in each layer of multilayer sheet. The outer layer of sheet is composed of "resin **B**". The bottom and intermediate layer of sheet is composed of each of one resin selected from "resin A" and "resin B". Evaluation results of weatherability, transparency, UV light transmittance and impact strength of produced polyester multilayer sheet are shown in Table 2.

### EXAMPLE 2 ∼ EXAMPLE 3 AND COMPARATIVE EXAMPLE 1

Prepare polyester multilayer sheets as same method as EXAMPLE 1, except changing the preparation conditions of copolymer and sheet as shown in Table 1.
Evaluation results of every properties of the produced polyester multilayer sheet are shown in Table 2.

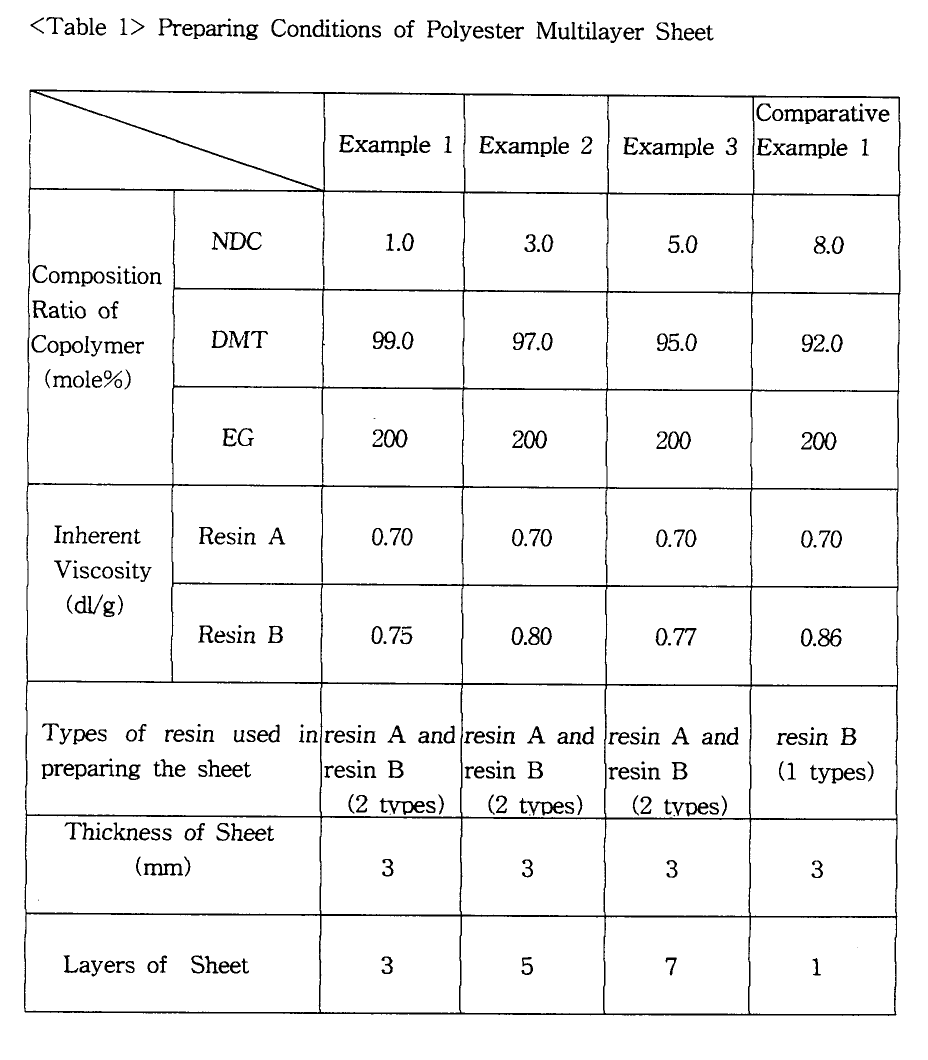

Inherent viscosity in Table 1 is measured with ubelohde type capillary viscometer at 30°C after dissolved 0.2g of resin at 100°C in 25mℓ of mixture of Phenol/Tetrachloroethane(weight ratio 6/4).

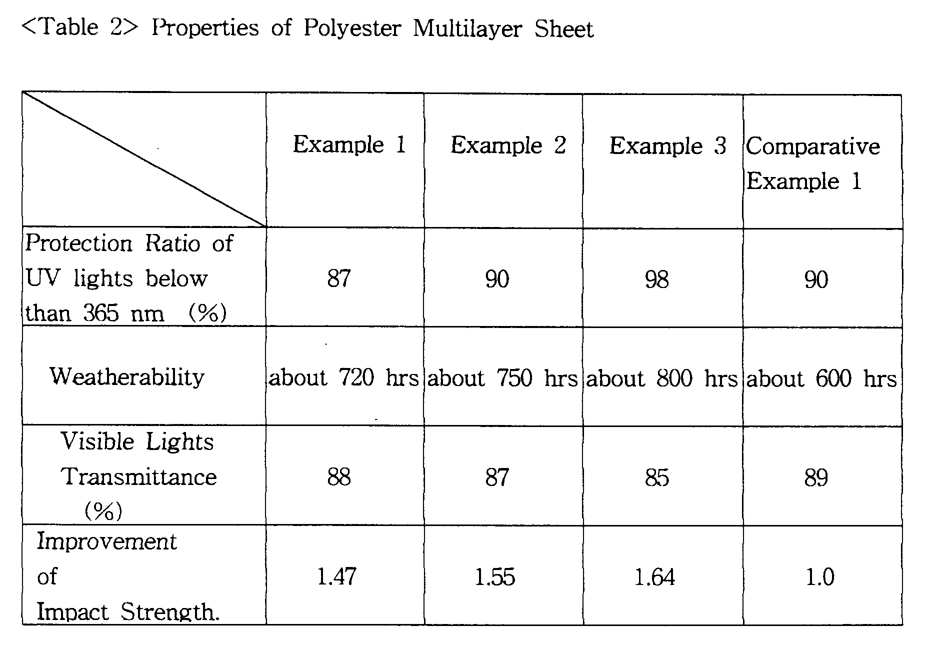

Improvement of impact strength in Table 2 is relative value of impact strength to that of comparative example 1 (1.0) after measuring each value by using A FALLING DART TYPE IMPACT TESTER, Model 8250 of Dynatup Co.

Protection Ratio of UV lights is measured with UV - VISIBLE SPECTRA by using HP8452A UV-VIS SPECTROPHOTOMETER.

Weatherability is evaluated, as ASTM G 26-90, by the change of impact strength depending on exposure time under UV lights in weather-o-meter by using INSTRON TENSILE STRENGTH TESTER.

The polyester multilayer sheet of the present invention is a multilayer sheet arrayed by turns with copolymerized polyester resins comprising 2 kinds of inherent viscosity and refractive index, suitable for window glass substitute of building, transparent clothing material for agricultural field. based on its excellent impact strength, weatherability, and transparency with cheap production cost.

## Claims

1. A polyester multilayer sheet, having excellent impact strength and weatherability, characterized by coextruded in turn at least 3 layers of sheets using at least 2 kinds of copolyester resins which are composed of 5 -99 mol% of ethyleneterephthalate and 1-95 mol% of ethylenenaphthalate or ethyleneisophthalate and have at least 0.005 dl/g of inherent viscosity difference to each other, wherein the sheet arrayed as outer layer has a higher inherent viscosity than that of the inner layer.

2. The polyester multilayer sheet, according to claim 1, wherein the constitution ingredients and copolymerization ratio of said resins which compose each layer are the same.

3. The polyester multilayer sheet, according to claim 1, wherein the constitution ingredients and copolymerization ratio of said resins which compose each layer are different.

4. The polyester multilayer sheet, according to any of claims 1-3, wherein the copolyester resins are composed of 85-99 mol% ethyleneterephthalate and 1-15 mol% ethylenenaphthalate or ethyleneisophthalate.

5. The polyester multilayer sheet, according to any of claims 1-4, wherein the thickness of said polyester multilayer sheet is 2-10 mm.

6. The polyester multilayer sheet, according to any of claims 1-5, wherein the polyester multilayer sheet is composed of 3-7 layers.

7. The polyester multilayer sheet, according to any of claims 1-6, wherein the thickness of said polyester multilayer sheet is 3 mm, its visible light transmittance is at least 85 %, and its protection ratio of UV light which has less than 365 nanometer in wavelength, is more than 85 %.

8. A process for preparing a polyester multilayer sheet, having excellent impact strength and weatherability, characterized by coextruding at least 2 kinds of copolyester resins, which are composed of 5-99 mol% of ethyleneterephthalate and 1-95 mol% of ethylenenaphthalate or ethyleneisophthalate and have at least 0.005 dl/g of inherent viscosity difference to each other, into a multilayer sheet composed of at least 3 layers which are arrayed in turn by a high inherent viscosity resin and a low inherent viscosity resin, so that its outer layer has a higher inherent viscosity than the inner layer.

9. The process for preparing a polyester multilayer sheet according to claim 8, wherein the constitution ingredients and copolymerization ratio of said resins which compose each layer are the same.

10. The process for preparing a polyester multilayer sheet according to claim 8, wherein the constitution ingredients and copolymerization ratio of said resins which compose each layer are different.

11. The process for preparing a polyester multilayer sheet according to any of claims 8-10, wherein the copolyester resins are composed of 85-99 mol% of ethyleneterephthalate and 1-15 mol% of ethylenenaphthalate or ethyleneisophthalate.
